# EUROPÄISCHE PATENTSCHRIFT

(11) **EP 2 322 311 B1**
(45) Veröffentlichungstag und Bekanntmachung des Hinweises auf die Patenterteilung: **04.05.2016**
(21) Anmeldenummer: 10190868.9
(22) Anmeldetag: 11.11.2010
(51) Int. Cl.: B23K 26/02, B23K 26/073, B23K 26/22

(54) **Vorrichtung zum Punktschweißen mit Laserstrahl**
Device for laser spot welding
Dispositif de soudage par point au laser

(30) Priorität: 11.11.2009 DE 102009053261
(43) Veröffentlichungstag der Anmeldung: 18.05.2011
(73) Patentinhaber: JENOPTIK Automatisierungstechnik GmbH, 07745 Jena (DE)
(72) Erfinder: Wollmann, Werner, 07747 Jena (DE); Krämer, Wilfried, 07747 Jena (DE); Langebach, Jan, 07551 Gera (DE); Fischbach, Sven, 06686 Starsiedel (DE)
(74) Vertreter: Schaller, Renate

(56) Entgegenhaltungen:
- EP-A1- 2 036 653
- DE-C1- 10 005 593
- JP-A- 61 225 885
- US-B1- 6 713 713

## Beschreibung

Die Erfindung betrifft ein Verfahren zum Punktschweißen mit Laserstrahl, wie es gattungsgemäß aus der DE 100 05 593 C1 bekannt ist.

Unabhängig von dem Material, aus dem zwei zu verschweißende Bauteile bestehen, kommt es beim Punktschweißen darauf an, dass die beiden Bauteile über die vorgegebene Anzahl, die Anordnung, die Form und die Größe der Schweißpunkte dauerhaft miteinander verbunden werden. In vielen Anwendungsfällen, insbesondere wenn das Punktschweißen als Lasertransmissionsschweißen von Kunststoffen ausgeführt wird, kommt hinzu, dass die Schweißpunkte seitens des laserabsorbierenden Bauteiles nicht wahrnehmbar sein sollen.

An eine industrietaugliche Vorrichtung zum Punktschweißen ergibt sich daher, neben den üblichen Anforderungen an Werkzeugvorrichtungen, wie wartungsarm, leicht, materialextensiv und kostenextensiv, die Forderung nach einer gleichmäßigen Verteilung der Strahlungsenergie im Schweißpunkt.

Es ist dem Fachmann klar, dass unter einem Schweißpunkt kein mathematisch idealer Punkt verstanden wird, sondern eine ausgedehnte Fläche mit einer vorgegebenen Kontur, die im Regelfall kreisförmig ist, aber z.B. auch ein Rechteck sein kann.

Aus der DE 100 05 593 C1 ist eine hand- oder maschinengeführte autonome Einrichtung zum Punktschweißen bekannt. Die Einrichtung umfasst eine laserstrahlenerzeugende Einheit, der in Strahlungsrichtung eine strahlformende Optik nachgeordnet ist, welche den Laserstrahl so formt, dass eine ringförmige oder weitestgehend gleiche Energieverteilung im Querschnitt des Laserstrahls entsteht und den Schweißpunkt vergrößert. Der strahlformenden Optik ist ein in Strahlungsrichtung verschiebbarer Hohlzylinder nachgeordnet, der mehrere Funktionen hat.
Im Ruhezustand der Einrichtung und damit auch beim Aufsetzen der Einrichtung auf die beiden zu verschweißenden Bauteilen, ist der Hohlzylinder ausgefahren und befindet sich damit in seiner größtmöglichen Entfernung von der strahlformenden Optik.
Seitens der strahlformenden Optik ist der Hohlzylinder im Ruhezustand durch eine Klappe, die als Strahlfalle dient und die über ein Drehgelenk am Gehäuse der Einrichtung befestigt ist, unter Wirkung einer Druckfeder verschlossen.

Indem die Einrichtung mit der freien Öffnung des Hohlzylinders aufgesetzt wird, wird der Hohlzylinder innerhalb des Gehäuses gegen die Kraft der Druckfeder in Richtung der strahlformenden Optik verschoben. Damit wird zum einen durch den Hohlzylinder eine zunehmende Kraft auf die Bauteile ausgeübt, womit diese im Schweißbereich in einen engen Flächenkontakt kommen und zum anderen wird gleichzeitig die Klappe geöffnet. Im vollständig eingefahrenen Zustand des Hohlzylinders ist die Kraft auf die Bauteile so groß, dass sie einer vorgegebenen, für die zu verschweißenden Bauteile spezifischen, Andruckkraft entspricht und entgegen der Federkraft der Druckfeder, die Klappe vollständig geöffnet ist, damit der Laserstrahl ungehindert durch den Hohlzylinder auf die Bauteile treffen kann. Indem die Klappe in die geöffnete Position gelangt, betätigt sie einen Schalter der die laserstrahlerzeugende Einheit aktiviert.

Der Hohlzylinder, der im Sinne der nachfolgend beschriebenen Erfindung ein Rohr mit einem kreisringförmigen Querschnitt ist, dient demnach als mechanisches Bauteil über dessen Verschiebung letztendlich ein Schalter betätigt wird. Er dient auch dazu, dass nicht Teile des Laserstrahles während des Schweißens nach außen gelangen und er dient als Andruckkörper über den eine Andruckkraft auf die Bauteile wirkt.
Die gewünschte Strahlformung erfolgt durch eine spezielle strahlformende Optik.

Die in der DE 100 05 593 C1 beschriebenen Ausführungsbeispiele unterschieden sich in der Kombination einer ausgewählten laserstrahlerzeugenden Einheit und der Auswahl der die strahlformende Optik bildenden optischen Elemente um die gewünschte Verteilung von Strahlungsenergie im Schweißpunkt zu erhalten.
Alternativ werden hierfür spezielle optische Elemente vorgeschlagen, wie ein Axikon oder eine Fresnellinse, bzw. spezielle laserstrahlerzeugende Einheiten wie ein innen gepumpter Hochleistungsfaserlaser.

Für eine automatisierte Führung und Bedienung der Einrichtung stellt sich das Öffnen und Schließen einer Laserfalle mit dem Aufsetzen und Abheben der Einrichtung, sowie die damit verbundene Betätigung eines Schalters, zur doppelten Absicherung, dass keine Laserstrahlung aus der Einheit austritt, wenn die Einheit nicht bestimmungsgemäß aufgesetzt wurde, als unnötiger technischer Aufwand dar.

Nachteilig an einer Einrichtung gemäß der DE 100 05 593 ist auch, dass mit der Dimensionierung der Druckfeder die Andruckkraft der Einheit vorgegeben ist, d.h. dass die Einheit für eine spezielle Bauteilkombination optimiert ist und somit nicht ohne weiteres für andere Bauteilkombinationen, sprich Bauteile aus anderem Material oder anderer Dimension, insbesondere unterschiedliche Materialdicke im Schweißbereich, verwendbar ist. Auch ist die Schweißpunktgröße durch die strahlformende Optik vorgegeben und nicht veränderbar.

Der Erfindung liegt die Aufgabe zugrunde, eine Vorrichtung zum Punktschweißen mittels Laserstrahl zu schaffen, die einfach herstellbar und flexibel an verschiedene Anwendungen anpassbar ist, indem die Andruckkraft variabel eingestellt werden kann und die Schweißpunktgröße und -form mit nur geringer Veränderung der Vorrichtung verändert werden kann.

Diese Aufgabe wird mit einer Vorrichtung zum Punktschweißen mittels Laserstrahl gelöst, bestehend aus wenigstens einer Schweißeinheit mit einer optischen Achse, entlang der ein Hochleistungsdiodenlaser 1, eine strahlformende Optik und ein Rohr angeordnet sind, sowie einer Bauteilaufnahme, in der die zu verschweißenden Bauteile zur Schweißeinheit positioniert werden können. Darüber hinaus umfasst die Vorrichtung Mittel zur Erzeugung einer Andruckkraft zwischen dem freien, der strahlformenden Optik abgewandten Rohrende und den zu verschweißenden Bauteilen in Richtung der optischen Achse. Der Hochleistungslaser, die strahlformende Optik und das Rohr sind über ein Gehäuse fest zueinander angeordnet sind und die innere Umfangsfläche des Rohres ist für den Laserstrahl reflektierend ist. Die strahlformende Optik ist so ausgelegt ist, dass sie einen von dem Hochleistungsdiodenlaser kommenden Laserstrahl in einen divergenten Laserstrahl umformt, bei dem durch Mehrfachreflexion am inneren Umfang des Rohres der Strahlquerschnitt an den Querschnitt des Hohlraumes des Rohres anpasst und dessen Strahlungsintensitätsverteilung über den Strahlquerschnitt homogenisiert wird.
Idealerweise passt die strahlformende Optik den Laserstrahl so an das Rohr an, dass er innerhalb des Rohres durch Totalreflexion weitergeleitet wird.

Vorteilhaft umfasst die Vorrichtung eine Vielzahl von Schweißeinheiten, die in ihrer Anzahl und ihrer Anordnung zueinander auf die Anzahl und die Anordnung der Schweißpunkte, über die die zu verschweißenden Bauteile miteinander verbunden werden sollen, abgestimmt ist, womit alle Schweißpunkte zeitgleich hergestellt werden können. Eine solche bauteilespezifische Vorrichtung ist dann allerdings nur zur Verwendung eines speziellen Schweißpunktmusters, gebildet durch die Anzahl und die Anordnung der Schweißpunkte, geeignet.
Im Vergleich zu einer Vorrichtung die nur eine Schweißeinheit umfasst und mit der entsprechend die einzelnen Schweißpunkte nur einer nach dem anderen hergestellt werden können, ist allerdings auch bereits eine Vorrichtung von Vorteil die z.B. zwei Schweißeinheiten oder drei auf einer Geraden angeordnete Schweißeinheiten aufweist. Mit einer solchen Vorrichtung können die Schweißpunkte gruppenweise nacheinander oder sofern mehrere Vorrichtungen gleichzeitig eingesetzt werden, gruppenweise zeitgleich hergestellt werden. Somit können unterschiedlichste Schweißpunktmuster hergestellt werden, die allerdings keine Variation der Abstände der Schweißpunkte zulässt, was bei einer Vorrichtung mit nur einer Schweißeinheit immer möglich ist.

Die Anordnung der Rohre, die sich aus der Anordnung einer Vielzahl von Schweißeinheiten ergibt, kann vorteilhaft durch einen Metallblock gebildet sein, der mit einer Anzahl von Durchbrüchen versehen ist - gleich der Anzahl und der Anordnung der Schweißpunkte.

Von besonderem Vorteil ist, dass über die Auswahl des Rohrquerschnittes in seiner Größe und seiner Form, die Größe und Form der Schweißpunkte vorgegeben wird. Häufig ist anstelle einer üblicherweise runden Form für einen Schweißpunkt eine rechteckige Form besser geeignet. Ein Rohr lässt sich kostengünstig herstellen, unabhängig von seiner Querschnittsform und Größe. Die Länge wird so gewählt, dass über die Vielzahl der Reflexionen innerhalb des Rohres eine hinreichend gute Homogenisierung stattfindet, was zu einer gleichmäßig festen Schweißverbindung innerhalb des Schweißpunktes führt.
Um die Andruckfläche mit der das Rohrende an die zu verschweißenden Bauteile gedrückt wird, unabhängig vom gewählten Rohrquerschnitt zu gestalten, ist vorteilhaft an dem freien Rohrende ein Andruckkörper angebracht.

Der Andruckkörper kann vorteilhaft eine ringförmige Planscheibe, eine das freie Rohrende verschließende Planplatte oder ein Kreuzelement sein.

Mit einer ringförmigen Planscheibe kann die Andruckfläche in ihrer Größe und ihrer Form gegenüber dem bloßen Rohrende verändert werden, wobei die Strahlung durch die Ringmitte ungehindert durchtreten kann. Das heißt im mittleren Bereich des Schweißpunktes werden die beiden zu verschweißenden Bauteile nicht aneinander gedrückt.
Mit der Verwendung eines Kreuzelementes als Andruckelement werden die zu verschweißenden Bauteile auch im mittleren Bereich entsprechend der Kreuzform partiell zusammengedrückt. Eine zusätzliche Reflexion an dem Kreuzelement wirkt weiter homogenisierend.
Mit einer das Rohrende verschließenden Planplatte, aus einem für den Laserstrahl transparentem Material, werden die zu verschweißenden Bauteile ganzflächig über den Schweißpunkt zusammengedrückt, was insbesondere beim Verschweißen von Folien von Vorteil sein kann.

Das Mittel zur Erzeugung einer Andruckkraft ist vorteilhaft ein Pneumatikzylinder mit einer Druckkammer und einem Zylinderkolben.

Besonders vorteilhaft kann die Druckkammer durch das Rohr gebildet sein, das seitens der strahlformenden Optik durch eine lasertransparente Planplatte abgedichtet ist und gemeinsam mit dem Gehäuse gestellfest gehalten wird. Der in dem Rohr geführte Zylinderkolben, der ebenfalls aus einem lasertransparenten Material besteht, wird mit einer Andruckkraft, erzeugt durch den in der Druckkammer eingestellten Überdruck, an die zu verschweißenden Bauteile angelegt.

Vorteilhaft kann die Druckkammer auch gestellfest oberhalb des Gehäuses angebracht sein und der Zylinderkolben ist über einen Stößel mit einer Andruckplatte fest verbunden, die mit dem Gehäuse in Verbindung steht, welches am Gestell über eine Linearführung in Richtung der optischen Achse verschiebbar ist.

Gestellfest angebracht, heißt z.B. fest montiert an einer Traverse oder an einem Roboterarm, der während des Schweißvorgangs fixiert wird und Gegenkräfte aufnehmen kann.

Das Mittel zur Erzeugung einer Andruckkraft kann vorteilhaft auch nur das auf die zu verschweißenden Bauteile aufgesetzte, mit einem Überdruck beaufschlagte Rohr sein, das seitens der strahlformenden Optik durch eine lasertransparente Planplatte abgedichtet ist. Auch in diesem Fall ist die Vorrichtung und damit das Rohr gestellfest gehalten.

Anhand der Zeichnung wird die Vorrichtung im Folgenden beispielhaft näher erläutert.

### Es zeigen:

- Fig. 1: eine Prinzipskizze eines ersten Ausführungsbeispiels einer Vorrichtung zum Punktschweißen mit einer Schweißeinheit
- Fig. 2: ein zweites Ausführungsbeispiel mit mehreren Schweißeinheiten in Explosivdarstellung
- Fig. 3a - 3c: verschiedene Querschnittsflächen des Rohres
- Fig. 4a - 4d: verschiedene Ausführungsbeispiele zur Gestaltung der Andruckfläche
- Fig. 5a - 5b: verschiedene Ausführungsbeispiele für Mittel zur Erzeugung der Andruckkraft

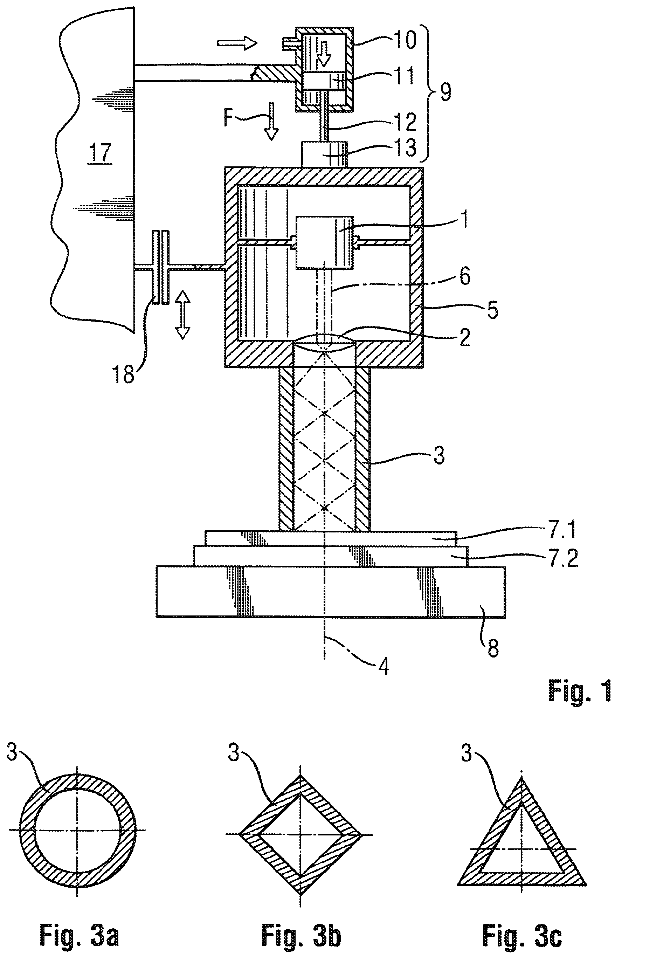

In der Fig. 1 ist ein erstes Ausführungsbeispiel für eine Vorrichtung zum Punktschweißen mittels Laserstrahl dargestellt.
Die Vorrichtung besteht im Wesentlichen aus einem Hochleistungsdiodenlaser 1, der einen Laserstrahl 6 aussendet, einer in Strahlungsrichtung nachgeordneten strahlformende Optik 2 und einem Rohr 3, die gemeinsam auf einer optischen Achse 4 angeordnet und über ein Gehäuse 5 fest miteinander verbunden sind.
Der Hochleistungsdiodenlaser 1 kann vorteilhaft ein Laserdiodenbarren aus einer Vielzahl von einzelnen Laserdioden sein, die in der Summe eine emittierende Zeile von z. B. 1 x 10 mm bilden und denen eine Kollimationsoptik vorgeordnet ist.
Der vorkollimierte Laserstrahl 6 wird über die nachgeordnete strahlformende Optik 2 so aufgeweitet, dass er vollständig in das Rohr 3 eingekoppelt wird und einen Divergenzwinkel aufweist, der zu einer Mehrfachreflexion beim Durchlaufen des Rohres führt. Um möglichst wenig Strahlungsverluste zu haben, sollte die Mehrfachreflexion vorteilhaft durch Totalreflexion erfolgen.
Zur Verfahrensdurchführung wird die Vorrichtung auf zwei bestimmungsgemäß aneinander gefügte, zu verschweißende Bauteile 7.1, 7.2 aufgesetzt, die in einer Bauteilaufnahme 8 so gehalten werden, dass die Rohrachse, gleich der optischen Achse 4, senkrecht auf der Oberfläche des ersten Bauteils 7.1 steht.
Das Rohr 3 wird mit einer vorbestimmten Andruckkraft F auf die zu verschweißenden Bauteile 7.1, 7.2 gedrückt, wobei die Andruckkraft F in dem hier dargestellten ersten Ausführungsbeispiel durch einen Pneumatikzylinder 9 erzeugt wird. Der Pneumatikzylinder 9 besteht aus einer Druckkammer 10 und einem Zylinderkolben 11, der über einen Stößel 12 mit einer Andruckplatte 13 fest verbunden ist.
Die Druckkammer 10 ist oberhalb des Gehäuses 5 an einem Gestell 17 befestigt und die Andruckplatte 13 wird über den Stößel 12, der in Richtung der optischen Achse 4 geführt wird, gegen das Gehäuse 5 gedrückt, welches entlang einer Linearführung 18 in Richtung der optischen Achse 4 am Gestell 17 verschiebbar ist. Über die Einstellung eines vorgegebenen Überdruckes in der Druckkammer 10 werden die beiden Bauteile 7.1, 7.2 mit einer vorwählbaren Andruckkraft F zusammengedrückt.
Unter einem Gestell 17 soll ein starrer Ständer, eine Traverse an der die Vorrichtung horizontal verschoben werden kann oder auch der Arm eines Roboters verstanden werden.

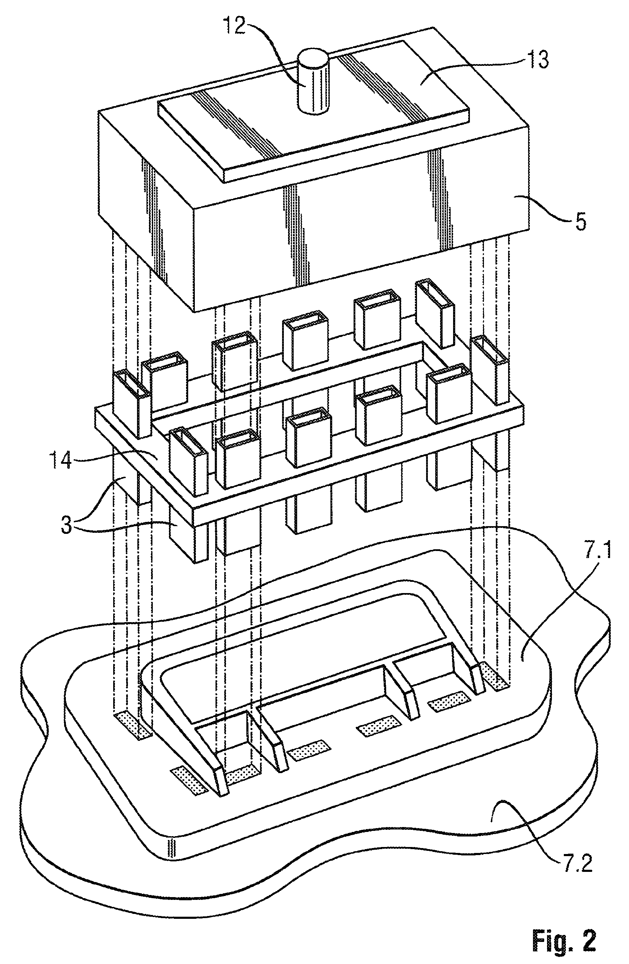

In Fig. 2 ist ein zweites Ausführungsbeispiel für eine Vorrichtung zum Punktschweißen gezeigt.
Bei den hier dargestellten zu verschweißenden Bauteilen 7.1, 7.2 sollen beispielhaft 12 Schweißpunkte hergestellt werden, die zueinander gleiche Abstände haben und auf einer Linie liegen, die ein Rechteck beschreibt. Die Schweißpunkte selbst haben eine gleiche Größe und sind rechteckförmig, um z.B. zwischen zwei am ersten Bauteil 7.1 ausgebildeten Stegen einen ausreichend groß ausgedehnten Schweißpunkt herstellen zu können. Die Schweißpunkte bilden mit ihrer Form, ihrer Größe und ihrer Anordnung zueinander ein Schweißpunktmuster.

Die Vorrichtung gemäß dem hier gezeigten Ausführungsbeispiel, ist bauteilespezifisch an dieses Schweißpunktmuster angepasst und umfasst entsprechend eine gleiche Anzahl von Schweißeinheiten, wie Schweißpunkte zum Verbinden zweier spezifischer Bauteile 7.1, 7.2 vorgesehen sind. Die Schweißeinheiten sind in einem gemeinsamen Gehäuse 5 untergebracht und gleich dem in Fig. 1 gezeigten Ausführungsbeispiel wirkt auf das Gehäuse 5 eine Andruckplatte 13, die über einen Stößel 12 mit einem hier nicht dargestellten Zylinderkolben 11 eines Pneumatikzylinders 9 in Verbindung steht. Die zu den Schweißeinheiten gehörenden Rohre 3 ragen aus dem Gehäuse 5 mit ihren freien Enden heraus und sind in einem gemeinsamen Halterahmen 14 stabilisiert.
Der gemeinsame Halterahmen 14 ist von den freien Rohrenden weit genug entfernt, um ein Aufsetzen auf dem ersten Bauteil 7.1, trotz in die Höhe ragender Stege, nicht zu behindern.

Anstelle eines Halterahmens 14 mit Rohren die durch hierfür vorgesehene Löcher geführt sind, könnte auch ein monolithischer Metallblock verwendet werden, in den Durchbrüche in einer Anordnung und einem Querschnitt eingebracht sind, die dem Schweißpunktmuster entsprechen. Zwar wäre ein solcher Metallblock vergleichsweise schwerer aber die Herstellung und insbesondere die Montage würde sich vereinfachen. Die Vorrichtung wäre insgesamt robuster und anstelle einer Vielzahl von Andruckflächen, gebildet durch die Rohrenden bzw. hieran befestigte Andruckkörper, wäre nur eine, alle Schweißpunkte einschließende, Andruckfläche vorhanden.

In den Fig. 3a bis 3b sind beispielhaft drei Querschnittsformen für mögliche Ausführungen des Rohres 3 gezeigt. Eine von der Kreisform abweichende Querschnittsform kann insbesondere dann vorteilhaft sein, wenn wie in Fig.2 gezeigt, der Platz für einen Schweißpunkt begrenzt ist.

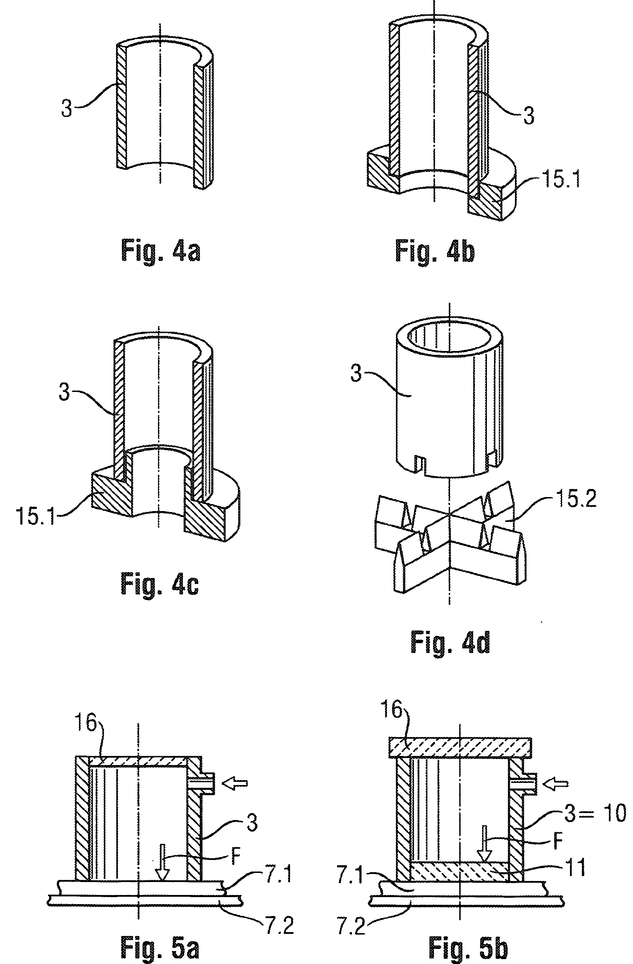

In den Fig. 4a bis 4d sind verschiedene Möglichkeiten gezeigt, wie die Andruckfläche, die grundsätzlich durch den Querschnitt des Rohres vorgegeben ist, durch angefügte Andruckkörper unterschiedlicher Form und Größe verändert werden kann, um die Qualität der Schweißpunkte zu beeinflussen.
Gemäß Fig. 4a ist die Andruckfläche durch den Rohrquerschnitt selbst bestimmt.

Nach Fig. 4b ist eine Planscheibe 15.1 aufgeschoben, während nach Fig. 4c eine Planscheibe 15.1 in das freie Rohrende eingeschoben ist.
Fig. 4d zeigt ein Kreuzelement 15.2 welches an das freie Rohrende angesteckt werden kann.

In den Fig. 5a und 5b sind weitere Ausführungsmöglichkeiten für die Mittel zum Erzeugen der Andruckkraft F gezeigt.
Während in Fig. 5a das Rohr 3 als eine zu den Bauteilen 7.1, 7.2 offene Kammer dargestellt ist, die mit dem Aufsetzen auf das erste Bauteil 7.1 verschlossen wird, sodass bei der Befüllung mit Druckluft diese unmittelbar auf die Oberfläche des ersten Bauteiles 7.1 drückt, wirkt bei der in Fig. 5b gezeigten Druckkammer 10, gebildet durch das Rohr 3, bei der Befüllung mit Druckluft ein lasertransparenter Zylinderkolben 11 auf die Bauteile 7.1, 7.2. In beiden Fällen ist die Vorrichtung gestellfest gehalten, um eine der erzeugten Andruckkraft F äquivalente Gegenkraft aufnehmen zu können.

In den voranbeschriebenen Ausführungsbeispielen ist jeweils die Bauteilaufnahme 8 fest positioniert und das mit dem Gehäuse 5 fest verbundene Rohr 3, oder ein darin geführtes Teil, wird gegen die verschweißenden Teile gedrückt.

Ebenso kann das Gehäuse 5 mit dem Rohr 3 fest positioniert sein und die zu schweißenden Teile (Fügepartner) werden an das freie Rohrende gedrückt, das heißt die Andruckkraft F wird dann über die Bauteilaufnahme 8 auf die zu verschweißenden Bauteile 7.1, 7.2 geleitet. Die Bauteilaufnahme 8 ist dann in einer Linearführung 18 in Richtung der optischen Achse 4 verschiebbar, um die Bauteile 7.1, 7.2 gegen das Rohr 3 mit einer vorbestimmten Andruckkraft F zu drücken.

Eine erfindungsgemäße Vorrichtung ist vergleichsweise leicht und sehr kompakt. Als Medienzuführung benötigt sie nur elektrischen Strom und Kühlwasser. Diese Medien können flexibel mittels Kabel und Schlauch zugeführt werden. Dadurch kann die Vorrichtung durch einen Roboter oder ein Achssystem an die jeweilige Schweißposition mit hoher Dynamik, (d. h. kurze Zykluszeiten) und hoher Positionsgenauigkeit geführt und das bzw. die Rohrenden an die zu verschweißenden Teile angepresst werden.

### Bezugszeichenliste

- 1: Hochleistungsdiodenlaser
- 2: strahlformende Optik
- 3: Rohr
- 4: optische Achse
- 5: Gehäuse
- 6: Laserstrahl
- 7.1: erstes zu verschweißendes Bauteil
- 7.2: zweites zu verschweißendes Bauteil
- 8: Bauteilaufnahme
- 9: Pneumatikzylinder
- 10: Druckkammer
- 11: Zylinderkolben
- 12: Stößel
- 13: Andruckplatte
- 14: Halterahmen
- 15.1: Planscheibe
- 15.2: Kreuzelement
- 16: Planplatte
- 17: Gestell
- 18: Linearführung

- F: Andruckkraft

## Patentansprüche

1. Vorrichtung zum Punktschweißen mittels Laserstrahl (6) bestehend aus wenigstens einer Schweißeinheit mit einer optischen Achse (4), entlang der ein Hochleistungsdiodenlaser (1), eine strahlformende Optik (2) und ein Rohr (3) angeordnet sind sowie eine Bauteilaufnahme (8), in der die zu verschweißenden Bauteile (7.1, 7.2) zur Schweißeinheit positioniert werden, und Mittel zur Erzeugung einer Andruckkraft (F) zwischen dem freien der strahlformenden Optik (2) abgewandten Rohrende und den zu verschweißenden Bauteilen (7.1, 7.2) in Richtung der optischen Achse (4), **dadurch gekennzeichnet,**
**dass** der Hochleistungslaser (1), die strahlformende Optik (2) und das Rohr (3) über ein Gehäuse (5) fest zueinander angeordnet sind,
**dass** die innere Umfangsfläche des Rohres (3) für den Laserstrahl (6) reflektierend ist,
**dass** die strahlformende Optik (2) so ausgelegt ist, dass sie einen von dem Hochleistungsdiodenlaser (1) kommenden Laserstrahl (6) in einen divergenten Laserstrahl (6) umformt, bei dem durch Mehrfachreflexion am inneren Umfang des Rohres (3) der Strahlquerschnitt an den Querschnitt des Hohlraumes des Rohres (3) anpasst und dessen Strahlungsintensitätsverteilung über den Strahlquerschnitt homogenisiert wird.

2. Vorrichtung nach Anspruch 1, **dadurch gekennzeichnet,**
**dass** die Vorrichtung eine Vielzahl von Schweißeinheiten umfasst, die in ihrer Anzahl und ihrer Anordnung zueinander auf die Anzahl und die Anordnung der Schweißpunkte, über die die zu verschweißenden Bauteile (7.1, 7.2) miteinander verbunden werden sollen, abgestimmt ist, womit alle Schweißpunkte zeitgleich hergestellt werden können.

3. Vorrichtung nach Anspruch 2, **dadurch gekennzeichnet,**
**dass** die Anordnung der Rohre (3) die sich aus der Anordnung einer Vielzahl von Schweißeinheiten ergibt, durch einen Metallblock gebildet ist, der mit Durchbrüchen versehen ist, gleich der Anzahl und der Anordnung der Schweißpunkte.

4. Vorrichtung nach Anspruch 1, **dadurch gekennzeichnet,**
**dass** über die Auswahl des Rohrquerschnittes in seiner Größe und seiner Form, die Größe und Form der Schweißpunkte vorgegeben wird.

5. Vorrichtung nach Anspruch 1, **dadurch gekennzeichnet,**
**dass** an dem freien Rohrende des Rohres (3) ein Andruckkörper angebracht ist, um eine vom Rohrquerschnitt abweichende Andruckfläche zu erhalten.

6. Vorrichtung nach Anspruch 5, **dadurch gekennzeichnet,**
**dass** der Andruckkörper eine Planscheibe (15.1) ist.

7. Vorrichtung nach Anspruch 5, **dadurch gekennzeichnet,**
**dass** der Andruckkörper ein Kreuzelement (15.2) ist.

8. Vorrichtung nach Anspruch 5, **dadurch gekennzeichnet,**
**dass** der Andruckkörper eine das freie Rohrende des Rohres (3) verschließende Planplatte (16) aus einem für den Laserstrahl (6) transparentem Material ist.

9. Vorrichtung nach Anspruch 1, **dadurch gekennzeichnet,**
**dass** das Mittel zu Erzeugung einer Andruckkraft (F) ein Pneumatikzylinder (9) ist, mit einer Druckkammer (10) und einem Zylinderkolben (11).

10. Vorrichtung nach Anspruch 9, **dadurch gekennzeichnet,**
**dass** die Druckkammer (10) durch das Rohr (3) gebildet ist, das seitens der strahlformenden Optik (2) durch eine lasertransparente Planplatte (16) abgedichtet ist und der Zylinderkolben (11) ebenfalls aus einem lasertransparentem Material besteht, der in dem Rohr (3) geführt an den zu verschweißenden Bauteilen (7.1, 7.2) anliegt.

11. Vorrichtung nach Anspruch 9, **dadurch gekennzeichnet,**
**dass** die Druckkammer (10) gestellfest oberhalb des Gehäuses (5) angebracht ist und der Zylinderkolben (11) über einen Stößel (12) mit einer Andruckplatte (13) fest verbunden ist, die mit dem Gehäuse (5) in Verbindung steht, welches am Gestell (17) über eine Linearführung (18) in Richtung der optischen Achse (4) verschiebbar ist.

12. Vorrichtung nach Anspruch 1, **dadurch gekennzeichnet,**
**dass** das Mittel zur Erzeugung einer Andruckkraft (F) das auf die zu verschweißenden Bauteile (7.1, 7.2) aufgesetzte, mit einem Überdruck beaufschlagte Rohr (3) ist, das seitens der strahlformenden Optik 2 durch eine lasertransparente Planplatte (16) abgedichtet ist.

## Claims

1. Device for spot welding with a laser beam (6), comprising at least one welding unit with an optical axis (4), along which a high-power diode laser (1), a beam-forming optical system (2) and a tube (3) are disposed, and a component-holding fixture (8) in which the components (7.1, 7.2) to be welded together are positioned relative to the welding unit, and means for generating a contact force (F) between the free end of the tube that faces away from the beam-forming optical system (2) and the components (7.1, 7.2) to be welded together in the direction of the optical axis (4), **characterized in that** the high-power laser (1), the beam-forming optical system (2) and the tube (3) are stationarily configured relative to one another by way of a housing (5), that the inside circumferential surface of the tube (3) is reflective for the laser beam (6), that the beam-forming optical system (2) is configured in such a manner that it transforms a laser beam (6) emitted by the high-power diode laser (1) into a divergent laser beam (6), the cross section of which is adapted to the cross section of the hollow space of the tube (3) by means of multiple reflections on the inside circumference of the tube (3) and the distribution of radiation intensity of which laser beam is homogenized across the cross section of the beam.

2. Device according to claim 1, **characterized in that** the device comprises a plurality of welding units, the number and configuration relative to one another being equal to the number and configuration of the weld spots, by means of which the components (7.1, 7.2) that are to be welded together are to be conjoined, thereby allowing all weld spots to be produced at the same time.

3. Device according to claim 2, **characterized in that** the configuration of the tubes (3) that results from the configuration of a plurality of welding units is formed by a metal block in which through-holes equal to the number and configuration of the weld spots are disposed.

4. Device according to claim 1, **characterized in that** the size and shape of the weld spots are predetermined by the size and shape of the selected cross section of the tube.

5. Device according to claim 1, **characterized in that** a pressure member is connected to the free tubular end of the tube (3) so as to obtain a contact surface different from the cross section of the tube.

6. Device according to claim 5, **characterized in that** the pressure member is a flat disk (15.1).

7. Device according to claim 5, **characterized in that** the pressure member is a cross-shaped element (15.2).

8. Device according to claim 5, **characterized in that** the pressure member is a flat plate (16) made of a material that is transparent to the laser beam (6) and which seals the free tubular end of the tube (3).

9. Device according to claim 1, **characterized in that** the means for generating a contact force (F) is a pneumatic cylinder (9) comprising a pressure chamber (10) and a cylinder piston (11).

10. Device according to claim 9, **characterized in that** the pressure chamber (10) is formed by the tube (3) which, on the side of the beam-forming optical system (2), is sealed by a flat plate (16) that is transparent to the laser, and that the cylinder piston (11), which, passing through the tube (3), rests against the components (7.1, 7.2) to be welded together, is also made of a material that is transparent to the laser.

11. Device according to claim 9, **characterized in that** the pressure chamber (10) is stationarily attached to the rack above the housing (5) and that the cylinder piston (11), via a push rod (12), is stationarily connected to a pressure plate (13) which is connected to the housing (5) which, by means of a linear guide (18), can be moved along the rack (17) in the direction of the optical axis (4).

12. Device according to claim 1, **characterized in that** the means for generating a contact force (F) is the tube (3) which is placed onto the components (7.1, 7.2) to be welded together and to which excess pressure is applied, which tube, on the side of the beam-forming optical system (2), is sealed off by a flat plate (16) that is transparent to the laser.

## Revendications

1. Dispositif de soudage par point au moyen d'un faisceau laser (6), comprenant au moins une unité de soudage avec un axe optique (4), le long duquel sont disposés un laser à diode de haute puissance (1), une optique de formation de faisceau (2) et un tube (3), et un logement de composant (8), dans lequel les composants (7.1, 7.2) à souder ensemble sont positionnés par rapport à l'unité de soudage, et des moyens pour générer une force de contact (F) entre l'extrémité libre du tube à l'opposé de l'optique de formation de faisceau (2) et les composants (7.1, 7.2) à souder ensemble dans la direction de l'axe optique (4), **caractérisé en ce que** le laser de haute puissance (1), l'optique de formation de faisceau (2) et le tube (3) sont disposés de manière fixe les uns par rapport aux autres par un boîtier (5), que la surface circonférentielle interne du tube (3) est réfléchissante pour le faisceau laser (6), que l'optique de formation de faisceau (2) est conçue de telle manière qu'elle transforme un faisceau laser (6) émis par le laser à diode de haute puissance (1) en un faisceau laser (6) divergent, dont la section transversale est adaptée à la section transversale de la cavité du tube (3) au moyen de réflexion multiple sur la circonférence interne du tube (3) et dont la distribution de l'intensité de rayonnement est homogénéifiée à travers la section transversale du faisceau.

2. Dispositif selon la revendication 1, **caractérisé en ce que** le dispositif comprend une pluralité d'unités de soudage, dont le nombre et l'agencement les unes par rapport aux autres sont égaux au nombre et à l'agencement des points de soudage, au moyen desquels les composants (7.1, 7.2) à souder ensemble sont destinés à être joints, permettant à tous les points de soudage d'être produit simultanément.

3. Dispositif selon la revendication 2, **caractérisé en ce que** l'agencement des tubes (3) qui résulte de l'agencement d'une pluralité d'unités de soudage est formé par un bloc métallique pourvu de trous de passage égaux au nombre et à l'agencement des points de soudage.

4. Dispositif selon la revendication 1, **caractérisé en ce que** la taille et la forme des points de soudage sont prédéterminées par la taille et la forme des sections transversales sélectionnées du tube.

5. Dispositif selon la revendication 1, **caractérisé en ce qu'**un élément de pression est lié à l'extrémité tubulaire libre du tube (3) pour obtenir une surface de contact différente de la section transversale du tube.

6. Dispositif selon la revendication 5, **caractérisé en ce que** l'élément de pression est un disque plat (15.1).

7. Dispositif selon la revendication 5, **caractérisé en ce que** l'élément de pression est un élément en forme de croix (15.2).

8. Dispositif selon la revendication 5, **caractérisé en ce que** l'élément de pression est une plaque plate (16) qui est constituée d'un matériau transparent au faisceau laser (6) et qui ferme l'extrémité tubulaire libre du tube (3).

9. Dispositif selon la revendication 1, **caractérisé en ce que** le moyen pour générer une force de contact (F) est un cylindre pneumatique (9) comprenant une chambre de pression (10) et un piston de cylindre (11).

10. Dispositif selon la revendication 9, **caractérisé en ce que** la chambre de pression (10) est formée par le tube (3) qui, au côté de l'optique de formation de faisceau (2), est fermé par une plaque plate (16) qui est transparente au laser, et que le piston de cylindre (11), qui, passant par le tube (3), repose contre les composants (7.1, 7.2) à souder ensemble, est aussi constitué d'un matériau qui est transparent au laser.

11. Dispositif selon la revendication 9, **caractérisé en ce que** la chambre de pression (10) est attachée de manière fixe au bâti au-dessus du boîtier (5) et que le piston de cylindre (11), par un poussoir (12), est lié de manière fixe à une plaque de pression (13) qui est liée au boîtier (5) qui, par un guidage linéaire (18), peut être déplacé le long du bâti (17) dans la direction de l'axe optique (4).

12. Dispositif selon la revendication 1, **caractérisé en ce que** le moyen pour générer une force de contact (F) est le tube (3) qui est placé sur les composants (7.1, 7.2) à souder ensemble et sur lequel est appliquée une surpression, lequel tube, au côté de l'optique de formation de faisceau (2), est fermé par une plaque plate (16) qui est
